# EUROPÄISCHE PATENTSCHRIFT

(11) **EP 4 179 865 B1**
(45) Veröffentlichungstag und Bekanntmachung des Hinweises auf die Patenterteilung: **18.09.2024**
(21) Anmeldenummer: 22206383.6
(22) Anmeldetag: 09.11.2022
(51) Int. Cl.: A01D 34/81, A01D 34/82, A01D 34/86

(54) **SCHEIBEN-MÄHKOPF SOWIE VERFAHREN ZUM BEFESTIGEN DER UMFANGSWAND DES SCHEIBEN-MÄHKOPF**
DISC MOWER HEAD AND METHOD FOR FIXING THE PERIPHERAL WALL OF THE DISC MOWER HEAD
TÊTE DE FAUCHEUSE À DISQUES ET PROCÉDURE DE FIXATION DE LA PAROI PÉRIPHÉRIQUE DE LA TÊTE DE FAUCHEUSE À DISQUES

(30) Priorität: 12.11.2021 DE 102021129538; 12.11.2021 DE 202021106204 U
(43) Veröffentlichungstag der Anmeldung: 17.05.2023
(73) Patentinhaber: MULAG FAHRZEUGWERK Heinz Wössner GmbH & CO. KG, 77728 Oppenau (DE)
(72) Erfinder: BITSCH, Markus, 77740 Bad Peterstal-Griesbach (DE); KIMMIG, Martin, 77728 Oppenau Ramsbach (DE)
(74) Vertreter: Weickmann & Weickmann PartmbB

(56) Entgegenhaltungen:
- ES-B1- 2 478 715
- JP-A- 2001 231 330
- JP-A- 2019 141 003
- US-A- 3 727 386
- US-A1- 2008 289 194

## Beschreibung

### I. Anwendungsgebiet

Die Erfindung betrifft einen Scheiben-Mähkopf, bei dem ein oder mehrere Schneidmesser um eine aufrechte Achse in einer meist horizontalen Ebene rotieren können und bei mehreren in der gleichen Ebene rotierenden Schneidmessern diese häufig an einer rotierend angetriebenen Tragscheibe befestigt sind weshalb vorliegend solche Mähköpfe, auch im Rahmen der vorliegenden Erfindung, Scheiben-Mähköpfe genannt werden, selbst wenn keine Tragscheibe vorhanden ist und das wenigstens eine Schneidmesser direkt an einer Messerwelle befestigt ist.

Ein solcher Scheiben-Mähkopf kann beispielsweise als Pfosten-Freimäher an einem dann meist größeren Walzen-Mähkopf, bei dem eine Messerwelle um eine liegende Messerachse rotiert, beweglich und über dessen Mäh-Spur seitlich vorstehend befestigt sein, um durch federnde Anlage um dort auftauchende Hindernisse wie einen Pfosten sehr exakt herumgeführt zu werden.

### II. Technischer Hintergrund

Ein solcher Pfosten-Freimäher in der Bauform als Scheiben-Mähkopf ist prinzipiell aus der Patentanmeldung DE 101 22 407 A1 bekannt.

Dabei besteht wie bei allen Mähköpfen das Problem, dass von dem Schneidmesser getroffene harte Gegenstände wie Steine oder Ast-Abschnitte mit hoher Geschwindigkeit radial weggeschleudert werden, weshalb die Umfangswände von Mähköpfen immer auch die Funktion eines Steinschlag-Schutzes erfüllen müssen und entsprechend ausgebildet sind.

Dabei besteht an dem in Fahrtrichtung vorderen Abschnitt der Umfangswand der Zielkonflikt, dass die Umfangswand einerseits nach radial außen stabil und steif genug ausgebildet sein muss, um nach vorn weggeschleuderte z.B. Steine im Gehäuse zurückzuhalten, andererseits nach radial innen biegsam genug ausgebildet sein muss, um das abzumähende Gras unter der vorderen Umfangswand hindurch in den Wirkbereich des Schneidmessers eintreten zu lassen, ohne es vorher flach zu drücken.

Die Druckschrift JP 2001 231330 A offenbart einen Scheiben-Mähkopf gemäß dem Oberbegriff des Anspruchs 1 sowie ein Verfahren gemäß dem Oberbegriff des Anspruchs 14.

Ferner wird auf die Druckschriften US 3 727 386 A, JP 2019 141003 A, US 3 727 386 A und ES 2 478 715 B1 hingewiesen.

### III. Darstellung der Erfindung

### a) Technische Aufgabe

Es ist daher die Aufgabe gemäß der Erfindung, einen Scheiben-Mähkopf, insbesondere ein Gehäuse hierfür, zur Verfügung zu stellen, der dieses Problem minimiert sowie ein Verfahren zu seiner Herstellung.

### b) Lösung der Aufgabe

Diese Aufgabe wird durch die Merkmale der Ansprüche 1 und 14 gelöst. Vorteilhafte Ausführungsformen ergeben sich aus den Unteransprüchen.

Hinsichtlich eines Scheiben-Mähkopfes mit einem Hauben-artigen, unten wenigstens teilweise offenen Gehäuse, in oder unterhalb dessen ein Schneidmesser rotierend um eine aufrechte Rotationsachse antreibbar ist, wird diese Aufgabe dadurch gelöst, dass als Steinschlagschutz die Umfangswand des Gehäuses zwei in radialer Richtung aufeinander folgende, separat Wand-Lagen aufweist, die vorzugsweise einander kontaktieren und über den Umfang des Gehäuses durchgehen.

Die so aufgebaute Umfangswand ist zumindest in ihrem unteren Bereich nach radial innen sehr elastisch, sodass sie von dem abzumähenden Gras nach innen umgebogen werden kann ohne das Gras flach zu drücken, andererseits zumindest in dem oberen Bereich darüber nach radial außen aber ausreichend stabil und steif in radialer Richtung ist, um einen ausreichenden Steinschlagschutz zu bieten, also das Wegfliegen von durch das Schneidmesser beschleunigten Teilen aus dem Gehäuse heraus zu verhindern.

Dabei ist die äußere Wand-Lage - für sich alleine betrachtet - im montierten Zustand, also wenn nur diese eine Wandlage montiert wäre, in radialer Richtung, zumindest nach radial innen, biegsamer als die allein montierte innere Wand-Lage.

Vorzugsweise steht die biegsamere, äußere Wand-Lage nach unten über die steifere Wand-Lage vor und reicht insbesondere bis unmittelbar oberhalb der Rotationsebene des Schneidmessers, sodass vom Schneidmesser getroffene feste Körper wie Steine höchstens in horizontaler Richtung wegfliegen können und durch die Schwerkraft und den Bewuchs nach kurzer Distanz gestoppt werden, aber nicht auf einer ansteigenden Flugbahn wegfliegen können.

Insbesondere steht die biegsamere, äußere Wand-Lage nach unten um
- mindestens 2 cm, besser mindestens 3 cm, besser mindestens 4 cm besser mindestens 5 cm
   und/oder
- um mindestens 15 %, besser mindestens 30 %, besser mindestens 40 % besser mindestens 50 % der Höhe der steiferen Wand-Lage (L2) vor.

Die beiden Wandlagen stehen zumindest an ihrem oberen Rand miteinander in Kontakt, da sie zwischen einem oberen, um die beiden Wandschichten herum verlaufenden, äußeren Randelement und dem Außenumfang eines vorzugsweise parallel zur Schneid-Ebene liegenden Innen-Ring gehalten werden, insbesondere verklemmt sind, sodass dieses insbesondere obere Randelement, samt der beiden Wandlagen leicht lösbar am Innen-Ring befestigt ist und insbesondere festgespannt ist.

Unter leicht lösbar wird in diesem Zusammenhang das Lösen ohne Werkzeug oder nur mit einem Standard-Werkzeug wie einem Schraubendreher oder Schraubenschlüssel verstanden und dies innerhalb von weniger als 1 Minute., besser weniger als 30 Sekunden, denn diese beiden Wandschichten sind Verschleißteile und müssen relativ oft gewechselt werden.

Die gesamte Einheit aus Innen-Ring, Umfangswand und äußerem Randelement - das sogenannte Gehäuse-Drehteil - ist drehbar um eine Drehachse, die insbesondere identisch mit der Rotationsachse der Schneidmesser ist, drehbar, insbesondere um den Umfang eines plattenförmigen Gehäuse-Oberteiles.

Beim Herumführen des Scheiben-Mähkopfes um ein Hindernis wie etwa ein Verkehrsschild rollt das gummierte äußere Randelement an dem Außenumfang des Hindernisses ab und beschädigt dieses nicht und zwischen beiden besteht eine ausreichend große Haftreibung, sodass das Gehäuse-Drehteil hierdurch zuverlässig in Drehung versetzt wird.

Deshalb muss auch der Steinschlagschutz über den gesamten Umfang umlaufend gleich ausgebildet sein, da im Gegensatz zu einem Walzen-Mähkopf, bei dem als Steinschlagschutz nach vorne häufig ein Kettenvorhang verwendet wird, jeder der Umfangsbereiche der nach vorn gerichtete Umfangsbereich sein kann.

Der Zusammenhalt zwischen den einzelnen Elementen besteht dadurch, dass das obere äußere Randelement ein endliches, zugfestes streifenförmiges Randelement ist, insbesondere ein Stahlband, mit einer Gummierung zumindest auf seiner Außenseite, welches aber ausreichend elastisch ist, um um den Außenumfang des Innen-Ringes herumgelegt werden zu können.

Vorzugsweise stehen von diesem äußeren Randelement Bolzen, die an ihm befestigt sind, radial nach innen vor und ragen durch die erste und zweite Wand-Lage hindurch, die auf diese Gewindebolzen mit entsprechenden Durchgangsöffnungen aufgefädelt werden können.

Der radiale Überstand über die innere der beiden Wandschichten nach innen wird zur Befestigung benutzt, indem er in entsprechende Ausnehmungen, insbesondere Sacklöcher, im Außenumfang des Innen-Ringes eingesteckt werden kann.

Einer der Bolzen befindet sich etwa in der Mitte der umlaufenden Länge des äu-ßeren Randelementes, ist als Gewinde-Bolzen ausgebildet und dient einer Vorfixierung mittels Verschrauben an einer Stelle des Außenumfanges des Innen-Ringes.

Jeweils ein Spannelement, insbesondere ein - in der Aufsicht winkelförmiger - Endwinkel ist an jeweils einem Ende des endlichen Randelementes befestigt. Die beiden anderen, gegeneinander weisenden, Schenkel des Endwinkels können gegeneinander in Umfangsrichtung verschraubt werden, wodurch das obere Randelement mit starker Vorspannung am Außenumfang des Innen-Ringes anliegt und die beiden Lagen zwischen äußerem Randelement und dem Innen-Ring verklemmt werden.

Die Umfangswand, insbesondere deren biegsame äußere Wandlage, ist in Umfangsrichtung durchgängig vorhanden, ggfs. mit einer Überlappungsstelle in Umfangsrichtung.

Dadurch ist eine einfachere Herstellung aus einem endlichen Teil statt aus einem ringförmig geschlossenen Teil, welches immer an den Durchmesser des Gehäuses angepasst sein muss, möglich.

Die zweite, steifere Wand-Lage ist dabei vorzugsweise die innere Wand-Lage, denn dadurch wird verhindert, dass die dann äußere biegsame Wand-Lage durch den Luftstrom der nach radial innen gerichtet ist und fast unvermeidbar durch das rotierende Schneidmesser erzeugt wird, diese biegsame Schicht radial nach innen saugt und diese dadurch funktionslos macht.

Die zweite, steifere Wand-Lage besteht zumindest im unteren Teil aus in Umfangsrichtung aufeinander folgende, ggfs. auch geringfügig beabstandete oder überlappende, Wandteile, insbesondere einzelne Wand-Platten, die aber auch im oberen Bereich miteinander verbunden sein können zu einer bandförmigen zweiten Wand-Lage, die durch Schlitzungen von unten her lediglich nach unten frei auslaufende einzelne Wand-Zungen aufweist.

Die Flexibilität der einzelnen Zungen ist dadurch größer als bei einem über die gesamte Höhe umlaufenden Band der zweiten steiferen Wandschicht.

Die erste biegsamere Wand-Lage, die vorzugsweise radial außen liegt, besteht vorzugsweise aus einer flexiblen Folie oder einem Gewebe, vorzugsweise aus Kunststoff.

Die erste biegsamere Wand-Lage, die vorzugsweise radial außen angeordnet ist, ragt weiter nach unten als die zweite Wandlage, die vorzugsweise radial innen angeordnet ist, und zwar vorzugsweise um mindestens 50 %, besser mindestens 100 % der axialen Erstreckung der ersten Wand-Lage. Dadurch kann das sich von vorne nähernde, abzumähende Ende Gras diesen Überstand de der leichteren Wand-Lage, etwa einer flexiblen Folie oder einem flexiblen Gewebe, unter dem unteren Ende der zweiten, stabileren Wand-Lage leicht nach innen umbiegen, ohne selbst flachgedrückt zu werden.

Die steifere Wand-Lage besteht vorzugsweise auch aus Kunststoff beispielsweise aus Vulcolan.

Die äußere, biegsame Wand-Lage hat vorzugsweise eine Biegesteifigkeit von unter 5 N/mm², insbesondere unter 3 N/mm2, insbesondere unter 3 N/mm2, insbesondere unter 1 N/mm²,

Die innere, steifere Wand-Lage hat insbesondere eine Biegesteifigkeit zwischen 5 N/mm² und 30 N/mm2, insbesondere zwischen 7 N/mm2 und 22 N/mm2, insbesondere zwischen 9 N/mm2 und 16 N/mm2, dass er nicht durch das sich annähernde Gras umgebogen werden muss.

Dabei dient die steifere, innere Wand-Lage primär dem Steinschlagschutz, und ist auch die verschleißfestere Schicht, die als Verschleißschutz für die biegsamere äußere Wand-Lage dient, die zwar nur einen geringen Schutz für leichte, nach außen wegfliegenden Teile bietet, aber vor allem dem radial von außen nach innen in den Messerbereich eintretende Gras nur einen geringen Widerstand entgegensetzt.

Deshalb besitzt die äußere, biegsame Wand-Lage vorzugsweise eine Härte zwischen 30 Shore und 3 Shore, insbesondere zwischen 20 Shore und 3 Shore, insbesondere zwischen 10 Shore und 3 Shore:
Die innere, steifere Wand-Lage hat insbesondere eine Härte zwischen 50 Shore und 90 Shore, insbesondere zwischen 60 Shore und 80 Shore, insbesondere zwischen 65 Shore und 75 Shore.

Die erste, hinsichtlich zumindest des Flächengewichtes, leichtere Wand-Lage hat vorzugsweise ein Flächengewicht zwischen 1,1 kg/m². und 1,6 kg/m², insbesondere zwischen 1,25 kg/m² und 1,55 kg/m², insbesondere zwischen 1,35 kg/m². und 1,45 kg/m².

Die zweite, hinsichtlich zumindest des Flächengewichtes, schwerere Wand-Lage hat vorzugsweise ein Flächengewicht zwischen 2,0 kg/m². und 6,0 kg/m², insbesondere zwischen 3,0 kg/m² und 4,5 kg/m², insbesondere zwischen 3,5 kg/m². und 4,0 kg/m².

Unter Flächengewicht wird dabei das Gewicht pro Flächeneinheit entlang der Hauptebene der jeweiligen Schicht verstanden.

Die äußere biegsame Wand-Lage hat vorzugsweise ein spezifisches Gewicht zwischen 1,1 kg/m³. und 2,0 kg/m³, insbesondere zwischen 1,4 kg/m³ und 1,7 kg/m³, insbesondere zwischen 1,5 kg/m³. und 1,6 kg/m³.

Die innere steifere Wand-Lage hat vorzugsweise ein spezifisches Gewicht zwischen 0,8 kg/m³. und 1,7 kg/m³, insbesondere zwischen 1,1 kg/m³ und 1,4 kg/m³, insbesondere zwischen 1,2 kg/m³. und 1,3 kg/m³ ihr spezifisches Gewicht kann also durchaus geringer sein als das der äußeren, biegsameren Wandlage, da hierbei die sehr viel größere Dicke, insbesondere um den Faktor 5, insbesondere um den Faktor 10, insbesondere um den Faktor 20, der inneren Wandlage gegenüber der äußeren Wandlage eine Rolle spielt.

Da für beide Schichten vorzugsweise Kunststoff verwendet wird und KunststoffMaterialien mit unterschiedlichen spezifischen Gewichten und Biegesteifigkeiten vielfältig am Markt vorhanden sind, können Biegesteifigkeit, Flächengewicht und spezifisches Gewicht sehr gut an die Art des abzumähenden Bewuchses angepasst werden.

Der gesamte Scheiben-Mähkopf ist vorzugsweise in der Aufsicht betrachtet rotationssymmetrisch aufgebaut, sodass die Schneidmesser-Achse und die Drehachse der Umfangswand vorzugsweise identisch sind.

Vorzugsweise ist innerhalb der Umfangswand des Gehäuses ein Abstreifer nahe an der Umfangswand angeordnet und die Innenseite der Umfangswand, meist die gesamte Umfangswand, relativ zum Abstreifer in Umfangsrichtung beweglich ist.

Dadurch schabt der Abstreifer an der Innenseite der Umfangswand anhaftendes Mähgut während der Relativbewegung ab.

Insbesondere ist zu diesem Zweck entweder die Innenseite der Umfangswand oder der Abstreifer um die Rotationsachse der Umfangswand drehbar.

Vorzugsweise ist die Umfangswand des haubenartigen, unten wenigstens teilweise offenen Gehäuses drehbar gegenüber einem feststehenden, nicht rotierenden, Gehäuse-Oberteil und an der Unterseite des Gehäuse-Oberteils innerhalb der Umfangswand der Abstreifer angeordnet, der einen bis nahe an die Innenseite der Umfangswand heranreichenden und vom Gehäuse-Oberteil nach unten ragenden Abstreif-Schenkel aufweist.

Durch die Relativbewegung zwischen Gehäuse-Oberteil und Umfangswand schabt der Abstreifer, insbesondere mit seinem nach unten abragenden, also aufrechtstehenden, Abstreif-Schenkel, das an der Innenfläche der Umfangswand angehaftete Mähgut ab.

Die Relativbewegung wird in der Regel dadurch bewirkt, dass der Scheiben-Mähkopf zum Abmähen von Bewuchs nahe bis an ein Hindernis heran, wie etwa einen Baum oder ein Verkehrsschild, benutzt wird, und hierfür ein Teil des Gehäuses des Scheiben-Mähkopfes, zum Beispiel mit dem Außenumfang seiner Umfangswand an diesem Hindernis während des Entlangfahrens oder Herumfahrens abrollt und hierdurch die Relativbewegung zwischen Umfangswand und Gehäuse-Oberteil erzielt wird.

Alternativ kann die Relativ-Bewegung vom Antrieb des Schneidmessers aus bewirkt werden, wobei die Umfangswand relativ zum Gehäuse-Oberteil über ein Zerkleinerungs-Getriebe mit einer stark untersetzten Drehzahl vom Schneidmesser-Antrieb aus angetrieben werden kann.

Zusätzlich zu dem Abstreifer sollte ein Räummesser vorhanden sein, welches vorzugsweise rotierend im Gehäuse angeordnet ist und vorzugsweise in der Höhe mit dem Abstreifer, insbesondere mit dessen Abstreifer-Schenkel, überlappt - weshalb das Räummesser auch in der Höhe über dem Schneidmesser angeordnet ist - und radial innerhalb des Abstreifers rotiert nahe an dessen Abstreif-Schenkel vorbei.

Dadurch gelangt das vom Abstreifer abgelöste komprimierte Mähgut sofort in den Wirkbereich des Räummessers und wird zuverlässig von diesem zerkleinert bevor es herabfällt auf dem Untergrund.

Das Räummesser kann mit der gleichen Drehzahl rotieren wie das Schneidmesser.

Insbesondere sind die Schneidmesser-Achse und/oder die Räummesser-Achse und/oder die Drehachse, mit der die Umfangswand relativ zum Gehäuse-Oberteil rotiert, identisch.

Vorzugsweise weist das Räummesser einen mit seinem freien Ende nach oben weisenden Räummesser-Schenkel auf, welcher in der Höhe mit dem Abstreifer überlappt.

Das Räummesser kann mit seinem etwa horizontal verlaufenden Befestigungsschenkel direkt oder indirekt mit dem wenigstens einen Schneidmesser verbunden sein kann, was eine besonders einfache Konstruktion ergibt.

In vielen Fällen sind nicht ein, sondern über den Umfang verteilt mehrere Schneidmesser vorhanden, die dann - meist gelenkig um eine Hochachse - am Außenumfang einer rotierenden Messerscheibe befestigt sind, die von dem Schneidmesser-Antrieb rotierend in einer im Mähbetrieb etwa horizontalen Ebene angetrieben wird.

Die Räummesser können dann ebenfalls an dieser Messerscheibe befestigt werden, sei es drehfest oder ebenfalls gelenkig um eine Hochachse, was dem Ausweichen von Hindernissen möglichst ohne Zerstörung des Messers dienen soll.

In der Regel dreht sich die Umfangswand des Gehäuses immer nur in eine Richtung relativ zum Gehäuse-Oberteil. Damit der Abstreifer eine gute Ablösewirkung erzielt, ist er schräggestellt zur radialen und/oder tangentialen Richtung und besitzt einen in Drehrichtung der Umfangswand zunehmenden Abstand zu seiner Drehachse. Dadurch ist er in der Lage, mit seiner Vorderkante, die der Innenumfangswand radial am nächsten steht, das dort anhaftende Mähgut abzuschaben und durch die Schrägstellung radial nach innen zu leiten, vorzugsweise in den Wirkbereich des Räummessers hinein.

Das Räummesser, insbesondere dessen nach oben aufragender Messer-Schenkel, steht vorzugsweise schräg zur Rotationsachse, um 30° bis 110°, insbesondere um 50° bis 90°, insbesondere um 60° bis 80°.

Unter einem nahen Heranreichen bestimmter Bauteile zueinander wird vorzugsweise ein Abstand von maximal 1,0 cm, besser maximal 0,5 cm, besser maximal 0,3 cm zwischen den jeweiligen beiden Bauteilen verstanden.

Der Abstreif-Schenkel des Abstreifers sollte in radialer Richtung relativ kurz sein, um während des Entlanggleitens des abgelöstes Mähgutes entlang des schräg stehenden Abstreif-Schenkels noch kein Herabfallen auf den Untergrund zu ermöglichen, bevor dieses komprimierte Mähgut radial anschließend weiter innen das Räummesser zum Zerkleinern erreicht hat, also eine radiale Erstreckung von maximal 5 cm, besser maximal 4 cm, besser maximal 3 cm, besser maximal 2 cm.

Um das leichtere Eintreten des Bewuchses in den Wirkbereich des Schneidmessers zu ermöglichen, ist die Umfangswand, vor allem in ihrem nach unten frei auslaufenden unteren Endbereich, vor allem nach radial innen, möglichst elastisch ausgebildet und besitzt eine Biegesteifigkeit von unter 3 N/mm², insbesondere unter 2 N/mm², insbesondere unter 1 N/mm^{2.}

Hinsichtlich des Verfahrens zum Befestigen der Umfangswand an dem Innenring am Rest des Hauben-artigen, unten offenen Gehäuses, in oder unterhalb welchem ein Schneidmesser um eine aufrechte Achse rotiert, insbesondere bei einem Scheiben-Mähkopf wie zuvor beschrieben, wird die bestehende Aufgabe dadurch gelöst, dass das endliche äußere Randelement mit daran gehaltener äußerer und innerer Wand-Lage am Außenumfang des Innen-Ringes angelegt, dann um diesen herumgebogen und an dem Außenumfang fixiert wird, was vorzugsweise durch Verspannen der beiden Enden des biegsamen, zugfesten äu-ßeren Randelementes gegeneinander erfolgt.

Biegsam ist das Randelement vorzugsweise um eine quer zu seiner Erstreckungsrichtung liegende Achse, wobei es so montiert wird, dass diese Biegeachse parallel zur Rotationsachse der Schneidmesser verläuft.

Vorzugsweise enthält das Randelement ein Stahlband oder Stahlseile, wobei die Breite des bandförmigen Randelementes im montierten Zustand aufrecht steht und dessen Dicke in radialer Richtung liegt.

In einer konkreten Vorgehensweise wird auf die auf einer Seite des äußeren biegsamen Randelements vorstehenden Radialbolzen zunächst die äußere Wand-Lage und dann die innere Wand-Lage, die jeweils entsprechende Durchgangsöffnung aufweisen, aufgesteckt.

Anschließend erfolgt eine Vorfixierung, indem ein etwa in der Mitte der Länge des Randelementes vorhandener als Gewindebolzen ausgebildeter Bolzen, der also ein Außengewinde besitzt, gegenüber dem Innen-Ring fixiert, insbesondere durch diesen hindurchgesteckt und vorzugsweise von innen her gegenüber diesem verschraubt wird oder auch von außen in eine Gewindebohrung des Innenrings eingeschraubt wird.

Die beiden Enden des Randelementes werden mittels einer Spannvorrichtung anschließend in Umfangsrichtung gegeneinander verspannt und damit das Landelement gegen den Außenumfang des Innen-Ringes an gepresst. Zu diesem Zweck ist an jedem Ende des Randelementes je ein in der Aufsicht L-förmiger Endwinkel als Spannelement vorhanden, die beide in Umfangsrichtung gegeneinander Mittels einer Spannschraube verschraubt werden können.

Das automatisch und ständig sich an den Innenflächen des Gehäuses, insbesondere an der Innenfläche von dessen Umfangswand, anhaftende, abgetrennte komprimierte Mähgut wird vorzugsweise ständig abgelöst, insbesondere mechanisch abgelöst und vorzugsweise das abgelöste komprimierte Mähgut automatisch ständig zerkleinert.

Letzteres ist vor allem dann wichtig, wenn dieses abgelöste komprimierte Mähgut nicht aus dem Gehäuse nach oben abgeführt wird, sondern auf den Untergrundzurück fallen soll als kleinteiliger Mulch.

Deshalb wird das abgelöste komprimierte Mähgut im Gehäuse mit Hilfe des gleichen Antriebes zerkleinert, der auch das Schneidmesser antreibt.

Das Ablösen des komprimierten Mähgutes von der Umfangswand geschieht mittels einer Relativbewegung in Umfangsrichtung, insbesondere einer rotierenden Relativbewegung, der Umfangswand des Gehäuses zum feststehenden Rest des Gehäuses, dem Gehäuse-Oberteil welches aus diesem Grund zweiteilig ausgebildet ist, durch einen Abstreifer am feststehenden Rest.

Die Relativbewegung kann durch Abrollen der Umfangswand an einem Hindernis bewirkt werden, während das Gehäuse-Oberteil diese Abroll-Bewegung nicht mitmacht, sondern in Drehrichtung stillsteht.

Die Relativbewegung kann auch auf andere Art und Weise bewirkt werden, beispielsweise durch den Antrieb des Schneidmessers bewirkt werden, wobei die Umfangswand relativ zum Gehäuse-Oberteil bei weitem nicht so schnell rotieren muss und auch nicht rotieren sollte wie das Schneidmesser relativ zum Gehäuse-Oberteil, sodass in diesem Fall die Umfangswand mit einer stark, vorzugsweise mindestens um den Faktor 10, besser um den Faktor 20, untersetzten Drehzahl vom Schneidmesser-Antrieb aus angetrieben werden könnte.

### c) Ausführungsbeispiele

Ausführungsformen gemäß der Erfindung sind im Folgenden beispielhaft näher beschrieben. Es zeigen:
- **Figur 1:**: eine Mäh-Einheit aus einem Walzen-Mähkopf und einem an dessen einen Endbereich befestigten Scheiben-Mähkopf als Zusatz-Scheiben-Mähkopf,
- **Figur 2:**: einen Vertikalschnitt durch den Scheiben-Mähkopf der **Figur 1****,**
- **Figur 3a:**: eine Aufsicht von oben auf den Scheiben-Mähkopf gemäß der Linie A - A in **Figur 2****,**
- **Figur 3b:**: eine Ansicht von unten auf den Scheiben-Mähkopf gemäß der Linie B - B in **Figur 2****.**

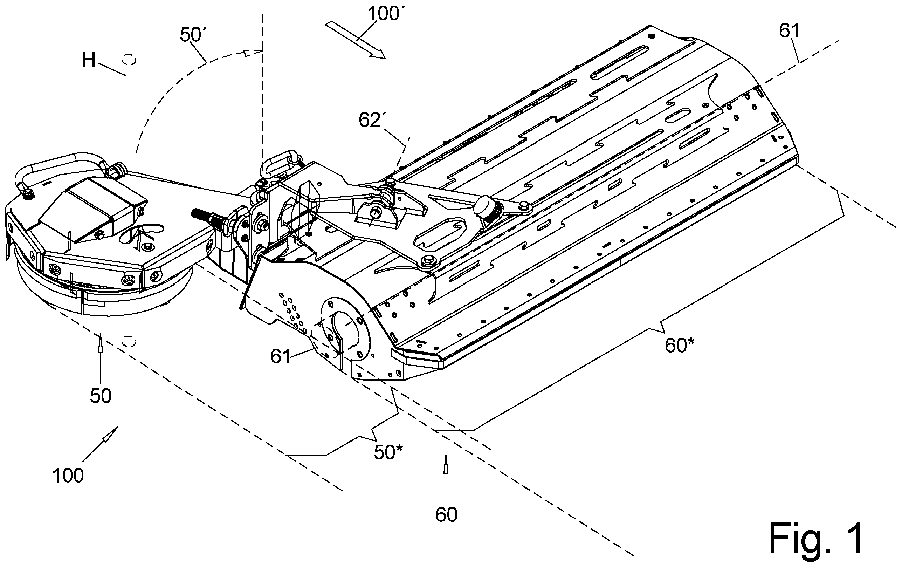

**Figur 1** zeigt den erfindungsgemäßen Scheiben-Mähkopf 50 in einem typischen Anwendungsfall, nämlich als Zusatz-Scheiben-Mähkopf 50 in einer Mäh-Einheit 100 zu einem Walzen-Mähkopf 60, dessen Mähspur 60* wesentlich breiter ist aufgrund einer mit ihrer Rotationsachse 61' horizontal, quer zur Mäh-Richtung 100' der Mäh-Einheit 100, liegenden Walzen-Messerwelle 61.

Der Scheiben-Mähkopf 50 besitzt in der dargestellten Arbeitsstellung - aus der er meist um eine horizontal, schräg zur Mäh-Richtung 100' liegende, Klappachse 62' hochgeklappt werden kann in eine Transportstellung über dem Walzen-Mähkopf 60 - eine deutlich schmalere Mäh-Spur 50*, die sich seitlich zumindest teilweise neben der Mäh-Spur 60* verläuft und geringfügig mit dieser überlappt.

Bei einem sich auf dieser Mähspur 50* annähernden Hindernis H wird der Scheiben-Mähkopf 50 um eine aufrechte Schwenkachse 50' verschwenkt in Richtung der Mitte der Mähspur 60*, ausgelenkt durch Kontakt mit dem Hindernis H, und danach wieder zurückgeschwenkt in die dargestellte Ausgangsstellung mittels einer nicht sichtbaren Feder, meist einer Gasdruck-Feder, deren Vorspannung meist einstellbar ist durch die hier Nieren-förmige Öffnung in der Oberseite des Gehäuses des Zusatz-Scheiben-Mähkopfes 50.

Dadurch kann der Walzen-Mähkopf 60 seine Mäh-Richtung 100' ohne Änderung fortsetzen, und der Bewuchs wird bis nahe an das Hindernis H heran abgemäht auf der Seite der Mail-Einheit 100.

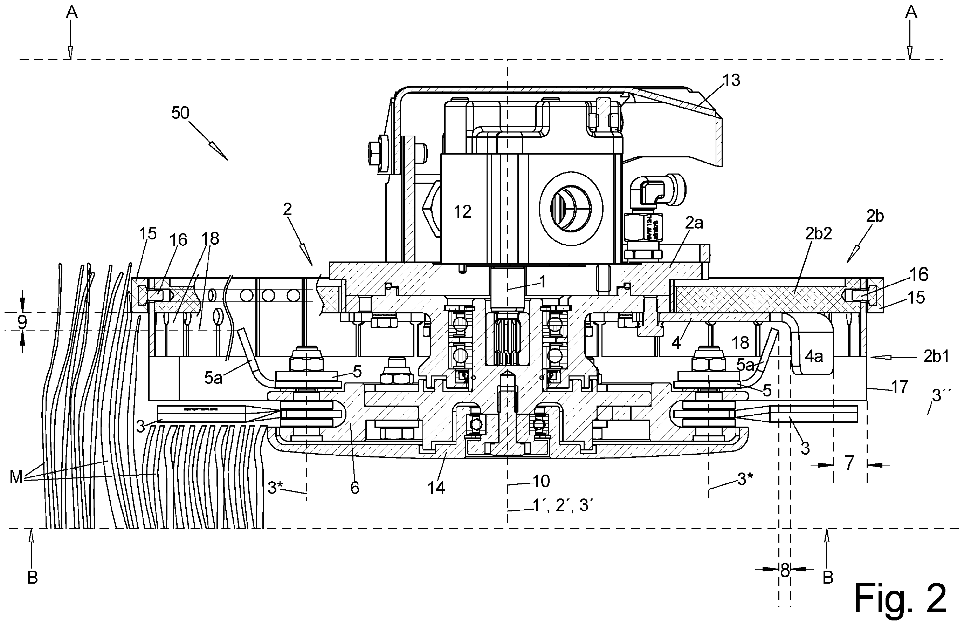

Der Vertikalschnitt der **Figur 2** lässt erkennen, dass die Schneidmesser 3 um eine im Mäh-Betrieb aufrecht stehende, meist vertikal stehende, Rotationsachse 3' - der axialen Richtung 10, die im Mähbetrieb meist auch die Vertikale 10 ist - rotieren und dadurch an ihrer in Mäh-Richtung 100' vorderen Seite sich annäherndes Mähgut M wie etwa Grashalme abmähen. Die Schneidmesser können dabei einen Anstellwinkel nach oben aufweisen zum Ablenken des abgemähten Mähgutes M S1, S2 zunächst nach oben.

Als Messerebene 3" kann dabei die Mitte der Höhe der Schneidmesser 3 an ihren äußeren freien Ende definiert werden.

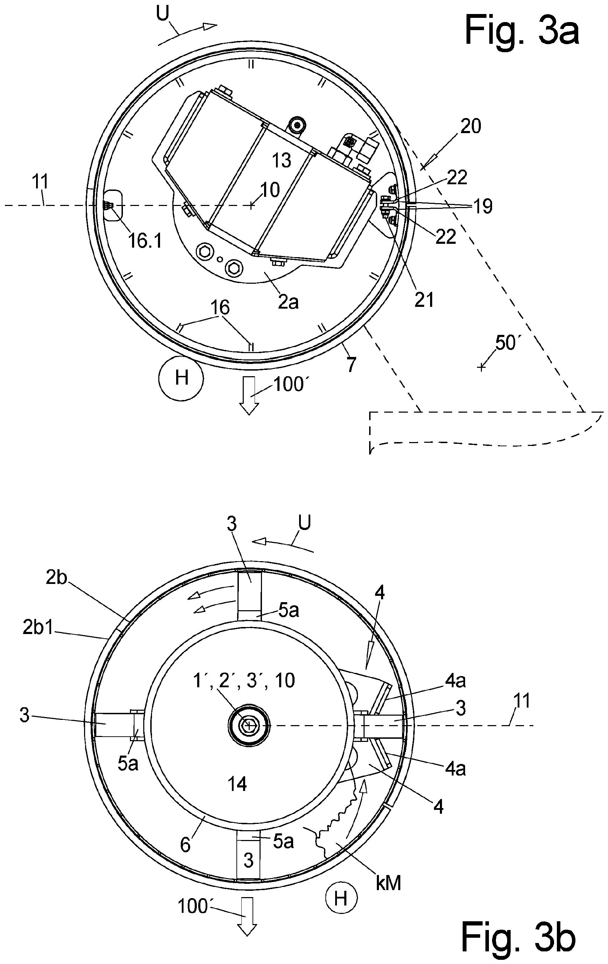

Die Schneidmesser 3 - wie die Ansicht der **Figur 3b** von unten zeigt, handelt es sich dabei um vier über den Umfang verteilte Schneidmesser 3 - sind in diesem Fall nicht direkt an der aufrecht stehenden, rotierenden Messerwelle 1 befestigt, sondern im Umfangsbereich einer Mäh-Scheibe 6, die am unteren freien Ende der Messerwelle 1 befestigt ist und in der Schneidmesser-Ebene 3" rotiert.

Das untere Ende der Messerwelle 1 sowie die Unterseite der Mähscheibe 6 sind durch eine dort angebrachte untere Abdeckung 14 geschützt, die etwa horizontal liegend bis etwa zum radial äußeren Rand der Mäh-Scheibe 6 reicht.

Die Schneidmesser 3 sind dabei um eine aufrechte Schneidmesser-Gelenkachse 3* an der Mäh-Scheibe 6 befestigt, sodass sie von einem harten Mähgut M ausgelenkt werden können.

Die Messerwelle 1 ist in einem plattenförmigen, im Mäh-Betrieb etwa horizontal liegenden, Gehäuse-Oberteil 2a gelagert und wird von einem darauf sitzenden Motor 12 angetrieben, der von einer sich darüber hinweg erstreckenden oberen Abdeckung 13 geschützt ist.

Das Gehäuse 2 umfasst neben dem Gehäuse-Oberteil 2a ein Gehäuse-Drehteil 2b mit einer ringförmigen Dreh-Platte 2b2 - dem Innen-Ring -, die gegenüber dem umfänglichen Randbereich des Gehäuse-Oberteiles 2a drehbar, insbesondere in einer Ebene parallel zur Schneidmesser-Ebene 3" - gelagert ist, und von deren äußeren Rand sich eine daran befestigte Umfangswand 2b1 nach unten erstreckt bis auf die Höhe oder knapp oberhalb der Schneidmesser 3.

Das Gehäuse-Drehteil 2b wird lediglich in Drehung versetzt durch Kontaktieren und Abrollen seines äußeren Umfanges an einem daran entlang gleitenden Hindernisses H, und ist vorzugsweise nicht mit der Messerwelle 1 wirkverbunden.

Erfindunqswesentlich ist, dass die Umfangswand 2b1, die im Wesentlichen dazu dient, von den Schneidmessern 3 getroffene Steine sowie das abgetrennte Mähgut an einem Wegfliegen in radialer Richtung 11 über den Umfang des Gehäuses 2 hinaus abzuhalten, aus zwei radial aufeinanderfolgenden Lagen 17, 18 aufgebaut ist, die am Außenumfang des Dreh-Ringes 2b2 befestigt sind, z.B. mittels eines radial außerhalb der beiden Schichten des Gehäuses 2 umlaufenden äußeren Randelementes 15.

Um beim Abrollen an einem Hindernis H eine gute Friktion sicherzustellen und gleichzeitig ein einfaches Wechseln der Umfangswand 2b1 oder von dessen Teilen - die Verschleißteile sind - zu ermöglichen, ist das äußere Randelement 15 ein endliches Stück eines zugfesten, elastischen, zumindest auf der Außenseite gummierten, Bandes, vorzugsweise eines gummierten Stahlbandes 15.

An diesem Randelement 15 können nach radial innen ragende Bolzen 16, insbesondere einer davon ein Gewinde-Bolzen 16.1, befestigt sein, auf die dann radial von innen zunächst die 1., flexiblere und oft leichtere, Wand-Lage 17 in Form einer Folie 17 und danach die 2., weniger flexible und oft schwerere, Wand-Lage 18 in Form von einzelnen Wand-Platten 18 oder am oberen Ende miteinander verbundenen Wand-Zungen 18 mittels entsprechender Durchgangsöffnungen aufgefädelt werden. Dabei steht im montierten Zustand die 1. Wand-Lage 17 nach unten über die 2. Wand-Lage 18 vor, insbesondere um mindestens 30 %, besser mindestens 50 %, besser mindestens 70 % der axialen Erstreckung der 2. Wandschicht 18.

Anschließend wird dieses äußere Randelement 15 um den Umfang des Innen-Ringes 2b2 gelegt und ein Gewinde-Bolzen 16.1 gegenüber dem Dreh-Ring 2b1 befestigt zur Vorfixierung des äußeren Randelementes 15. Dabei befindet sich der Gewinde-Bolzen 16.1 vorzugsweise in der Mitte der Länge des Randelementes 15.

Weitere entlang des Randelementes 15 vorhandene Bolzen 16 - die kein Außengewinde wie der Gewinde-Bolzen 16.1 aufweisen müssen - können dabei in entsprechende Ausnehmungen, meist Sacklöcher, in den Außenumfang des Innen-Ringes 2b1 gesteckt werden.

Anschließend werden die in Umfangsrichtung U dann aufgrund entsprechender Länge des Randelementes 15 nahe benachbarten Enden dieses äußere Randelementes 15 mittels einer Umfangs-Spannvorrichtung 20, die von oben her zugänglich ist, in Umfangsrichtung U gegeneinander gespannt, bis das äußere Randelement 15 mit einer vorgegebenen radialen Anpresskraft die beiden Lagen 17, 18 der Umfangswand 2b1 in deren oberen Endbereich gegen den Innen-Ring 2b2 pressen, von wo die Lagen 17, 18 sich frei endend nach unten erstrecken.

Die Umfangs-Spannvorrichtung 20 kann zwei stabile, nicht flexible, Endwinkel 22 umfassen, die jeweils mit einem ihrer Schenkel an je einem der Endbereiche des endlichen Randelementes 15 befestigt, beispielsweise verschraubt, sind, sodass deren zueinander benachbart liegende andere Schenkel mittels einer Spannschraube 21 in Umfangsrichtung U gegeneinander gespannt werden können und damit auch das Randelement 15 in Umfangsrichtung U gespannt wird.

Da hierbei die in der Regel in Umfangsrichtung U fix am Randelement 15 positionierten Bolzen 16 ihre Position in Umfangsrichtung ändern, sollten die Durchgangsöffnungen in den beiden Lagen 17, 18 der Umfangswand 2b1 in Umfangsrichtung U entsprechend groß dimensioniert sein, insbesondere als Langlöcher gestaltet und/oder ebenso die Ausnehmungen, meist Sacklöcher im Umfang des Innen-Ringes 2b2.

Ferner ist ein Abstreifer 4 in Form eines Blech-Winkels an der Unterseite des Gehäuse-Oberteils 2a so befestigt, dass von dem parallel zur Dreh-Platte 2b2 liegenden Befestigungs-Schenkel ein nach unten in das Gehäuse hinein abragender Abstreif-Schenkel 4a sich nahe bis auf einen Abstand 7 an die Innenfläche der Umfangswand 2b1 erstreckt, wie in **Figur 3b** ersichtlich, und dieser Abstreif-Schenkel 4a zusätzlich schräg gestellt ist zur axialen Richtung 10, den in diesem Fall übereinstimmenden Rotationsachsen 1', 2' und 3'.

Dadurch wird der - wie das Gehäuse-Oberteil 2a - im Betrieb nicht rotierende Abstreifer 4 bei einer Drehung des Gehäuse-Drehteiles 2b durch Abrollen an einem Hindernis H - wie in **Figur 3b** ersichtlich - so gedreht, dass der Abstreif-Schenkel 4a das an der Innenfläche der Umfangswand 2b1 abgelagerte komprimierte Mähgut kM abschabt. Hierfür ist der Abstreif-Schenkel 4a so schräg gestellt, dass das in Drehrichtung der Umfangs Wand 2b1 hintere Ende weiter von der Innenseite der Umfangswand 2b1 entfernt ist als sein vorderes Ende.

Vorzugsweise sind in diesem Fall zwei solche Abstreif-Schenkel 4a spiegelbildlich zur radialen Richtung 11 dazwischen angeordnet, mit jeweils gleichem Abstand zur Innenfläche der Umfangswand 2b1, um unabhängig von der Drehrichtung der Umfangswand 2b1 - die sich bei Wechsel der Anordnung am linken oder rechten Ende des Walzen-Mähkopfes 60 ändert - ein solches Abschaben stattfindet.

Wie **Figur 2** zeigt, sind an der rotierbaren Mähscheibe 6 nicht nur die Schneidmesser 3 befestigt, sondern auch Räummesser 5, vorzugsweise auf der gleichen Befestigungsposition in Umfangsrichtung der Mähscheibe 6 wie die Schneidmesser 3.

Die Räummesser 5 bestehen ebenfalls aus einem Blechwinkel und umfassen einen schräg zur Messerebene 3", also im Mähbetrieb meist der horizontalen Ebene, von der Mähscheibe 6 nach oben, hier schräg nach radial außen und oben bis auf einen Höhen-Abstand 9 zur Unterseite des Innenringes 2b2, aufsteigenden Räum-Schenkel 5a, der somit mit der Mähscheibe 6 und den Schneidmessern 3 mit rotiert. Das Räummesser 5, insbesondere dessen vom äußeren Ende von dessen Befestigungsschenkel, der insbesondere tiefer angeordnet ist als der Abstreifer 4, abragende Räum-Schenkel 5a, ist so positioniert, dass er radial innerhalb der feststehenden, nicht rotierenden Abstreifer 4, insbesondere deren sich in der Höhe erstreckenden Abstreif-Schenkeln 4a in relativ geringem Abstand 8, also nahe an diesen, vorbei rotieren kann, wobei der Abstreif-Schenkel 4a und der Räum-Schenkel 5a in der Höhe, also in axialer Richtung 10, überlappen.

Auf diese Art und Weise wird das vom Abstreifer 4 meist in großen Stücken abgelöste komprimierte Mähgut kH von dem Räum -Schenkel 5a zerkleinert.

### BEZUGSZEICHENLISTE

- 1: Messerwelle, Scheiben-Messerwelle
- 1': Rotationsachse
- 2: Gehäuse
- 2a: Gehäuse-Oberteil
- 2b: Gehäuse-Drehteil
- 2b1: Umfangswand
- 2b2: ringförmige Drehplatte, Innenring
- 2b`: Rotation-Achse
- 3: Schneidmesser
- 3': Schneidmesser-Rotationsachse
- 3*: Schneidmesser-Gelenkachse
- 3": Messerebene
- 4: Abstreifer
- 4a: Abstreif-Schenkel
- 5: Räummesser
- 5': Räummesser-Achse
- 5a: Räum-Schenkel
- 6: Mähscheibe
- 7: Abstand
- 8: Abstand
- 9: Abstand
- 10: axiale Richtung, Vertikale
- 11: radiale Richtung
- 12: Motor
- 13: obere Abdeckung
- 14: untere Abdeckung
- 15: äußeres Randelement
- 16: Gewindebolzen
- 17: 1. Wandlage, Folie, Gewebe
- 18: 2. Wandlage, Wandplatte, Wandzunge
- 19: End-Winkel
- 20: Spannvorrichtung
- 21: Spannschraube

- 50: Scheiben-Mähkopf, Zusatz-Scheiben-Mähkopf

- 60: Walzen-Mähkopf
- 61: Messerwelle, Walzen-Messerwelle
- 61': Rotationsachse
- 62': Klappachse

- 100: Mäh-Einheit
- 100`: Mäh-Richtung

- H: Hindernis
- kM: komprimiertes Mähgut
- U: Umfangs-Richtung

## Patentansprüche

1. **Scheiben-Mähkopf** (50), insbesondere Zusatz-Scheiben-Mähkopf (50) zu einem Walzen-Mähkopf (60), umfassend
- ein haubenartiges, unten im Wesentlichen offenes Gehäuse (2) mit einer Umfangswand (2b1),
- wenigstens ein in oder unterhalb des Gehäuses (2) rotierend um eine aufrechte Schneidmesser-Achse, die Rotationsachse (3'), antreibbares Schneidmesser (3),
- einen Innen-Ring (2b2) und
- ein oberes, äußeres Randelement (15),
wobei
- die Umfangswand (2b1) des Gehäuses (2) in radialer Richtung (11) zwei, sich insbesondere kontaktierende, separate Wand-Lagen (17, 18) aufweist, nämlich
- eine radial äußere, 1. Wand-Lage (17) und eine radial innere, 2. Wand-Lage (18),
**dadurch gekennzeichnet, dass**
- die beiden Wand-Lagen (17, 18) zumindest an ihrem oberen Ende einander kontaktieren, indem sie beide zwischen dem oberen, äußeren Randelement (15) und dem Innen-Ring (2b2) gehalten sind, und
- das obere äußere Randelement (15) ein endliches Randelement (15) ist.

2. Scheiben-Mähkopf nach Anspruch 1,
**dadurch gekennzeichnet, dass**
- die äußere Wand-Lage (17) im montierten Zustand alleine betrachtet in radialer Richtung, zumindest nach radial innen, biegsamer ist als die innere Wand-Lage (18),
- die äußere, biegsamere Wand-Lage (17) über die innere, steifere Wand-Lage (18) nach unten vorsteht, und
die Umfangswand (2b1)
- zumindest in ihrem unteren Bereich nach radial innen so elastisch ist, dass sich annäherndes Gras sie nach radial innen umbiegen kann,
- zumindest im oberen Bereich über diesem unteren Bereich nach radial außen ausreichend stabil ist, um als Steinschlagschutz zu dienen,
- insbesondere in Umfangsrichtung (U) aufeinanderfolgende, gegebenenfalls auch überlappende, ein oder mehrere Wandteile aufweist.

3. Scheiben-Mähkopf nach Anspruch 2,
**dadurch gekennzeichnet, dass**
- die äußere, biegsamere Wand-Lage (17) über die innere, steifere Wand-Lage (18) nach unten um
- mindestens 2 cm, besser mindestens 3 cm, besser mindestens 4 cm besser mindestens 5 cm
und/oder
- um mindestens 15 %, besser mindestens 30 %, besser mindestens 40 % besser mindestens 50 % der Höhe der steiferen Wand-Lage (18) vorsteht.

4. Scheiben-Mähkopf nach einem der vorhergehenden Ansprüche,
**dadurch gekennzeichnet, dass**
- die beiden Wand-Lagen (17, 18) zumindest an ihrem oberen Ende einander kontaktieren, indem sie beide zwischen einem gemeinsamen, oberen, äußeren Randelement (15) und dem Innen-Ring (2b2) verklemmt sind,
- insbesondere das obere Randelement (15) samt der beiden Wand-Lagen (17, 18) leicht lösbar, insbesondere festspannbar, am Innen-Ring (2b2) befestigt ist.

5. Scheiben-Mähkopf nach einem der vorhergehenden Ansprüche,
**dadurch gekennzeichnet, dass**
- die Umfangswand (2b1) des Gehäuses (2), insbesondere das obere Randelement (15) samt der beiden Wand-Lagen (17, 18) und dem drehbaren Innen-Ring (2b2), drehbar ist gegenüber einem nicht drehbaren, fixen Gehäuse-Oberteil (2a)).

6. Scheiben-Mähkopf nach einem der vorhergehenden Ansprüche,
**dadurch gekennzeichnet, dass**
- von dem äußeren Randelement (15) aus Bolzen (16) nach radial innen ragen,
- wovon insbesondere einer ein Gewinde-Bolzen (16.1) ist, welcher der Vorfixierung des Randelementes (15) am drehbaren Innen-Ring (2b2) dient,
- insbesondere die übrigen Bolzen (16) in Ausnehmungen, insbesondere Sacklöcher, im Außenumfang des Innen-Ringes (2b2) einsteckbar sind zur Lagefixierung des Randelementes (15) in der Höhe.

7. Scheiben-Mähkopf nach einem der vorhergehenden Ansprüche,
**dadurch gekennzeichnet, dass**
- die innere Wand-Lage (18) zumindest im unteren Teil in Umfangsrichtung (U) aufeinanderfolgende, gegebenenfalls auch überlappende, Wandteile, insbesondere einander nicht überlappende separate Wand-Platten oder nur im oberen Bereich miteinander verbundene Wand-Zungen, aufweist
und/oder
- die äußere Wand-Lage (17) eine in Umfangsrichtung (U) im Wesentlichen durchgehende, Wand-Lage ist, die insbesondere eine flexible Folie oder flexibles Gewebe umfasst, deren Enden insbesondere in Umfangsrichtung (U) überlappen.

8. Scheiben-Mähkopf nach einem der vorhergehenden Ansprüche,
**dadurch gekennzeichnet, dass**
- die äußere Wand-Lage (17) eine Biegesteifigkeit von unter 5 N/mm², insbesondere unter 3 N/mm², insbesondere unter 2 N/mm² insbesondere unter 1 N/mm² aufweist
und/oder
- die innere Wand-Lage (18), insbesondere deren Wandschicht-Platten, eine Biegesteifigkeit von über 5 N/mm², insbesondere von über 20 N/mm² insbesondere von über 50 N/mm² insbesondere von über 100 N/mm² aufweist.

9. Scheiben-Mähkopf nach einem der vorhergehenden Ansprüche,
**dadurch gekennzeichnet, dass**
- die äußere Wand-Lage (17) eine Härte von zwischen 30 Shore und 3 Shore, insbesondere zwischen 20 Shore und 3 Shore, insbesondere zwischen 10 Shore und 3 Shore aufweist
und/oder
- die innere Wand-Lage (18), insbesondere deren Wandschicht-Platten, eine Härte zwischen 50 Shore und 90 Shore, insbesondere zwischen 60 Shore und 80 Shore, insbesondere zwischen 65 Shore und 75 Shore aufweist.

10. Scheiben-Mähkopf nach einem der vorhergehenden Ansprüche,
**dadurch gekennzeichnet, dass**
- die äußere Wand-Lage (17) ein Flächengewicht zwischen 1,1 kg/m² und 1,6 kg/m², insbesondere zwischen 1,25 kg/m² und 1,55 kg/m², insbesondere zwischen 1,35 kg/m² und 1,45 kg/m² aufweist
und/oder
- die innere Wand-Lage (18), insbesondere deren Wandschicht-Platten, ein Flächengewicht zwischen 2,0 kg/m² und 6,0 kg/m², insbesondere zwischen 3,0 kg/m² und 4,5 kg/m², insbesondere zwischen 3,5 kg/m² und 4,0 kg/m² aufweist.

11. Scheiben-Mähkopf nach einem der vorhergehenden Ansprüche,
**dadurch gekennzeichnet, dass**
- die äußere Wand-Lage (17) ein spezifisches Gewicht zwischen 1,1 kg/m³ und 2,0 kg/m³, insbesondere zwischen 1,4 kg/m³ und 1,7 kg/m³, insbesondere zwischen 1,5 kg/m³ und 1,6 kg/m³ aufweist und/oder
- die innere Wand-Lage (18), insbesondere deren Wandschicht-Platten, ein spezifisches Gewicht zwischen 0,8 kg/m³ und 1,7 kg/m³, insbesondere zwischen 1,1 kg/m³ und 1,4 kg/m³, insbesondere zwischen 1,2 kg/m³ und 1,3 kg/m³aufweist, insbesondere die Wandschicht-Platten aus Vulculan bestehen.

12. Scheiben-Mähkopf nach einem der vorhergehenden Ansprüche,
**dadurch gekennzeichnet, dass**
die innere Wand-Lage (18) eine größere Dicke, insbesondere um den Faktor 5, insbesondere um den Faktor 10, insbesondere um den Faktor 20, gegenüber der äußeren Wand-Lage (17) aufweist.

13. Scheiben-Mähkopf nach einem der vorhergehenden Ansprüche,
**dadurch gekennzeichnet, dass**
- je zwei Rotationsachsen aus der Schneidmesser-Achse (3') und/oder einer Räummesser-Achse (5') eines Räummessers (5), welches rotierend in dem Gehäuse (2) angeordnet ist, und/oder einer Drehachse (2a') der Umfangswand (2a) maximal um 5 cm, besser maximal um 3 cm, besser maximal 2 cm zueinander beabstandet sind,
- insbesondere mindestens je zwei Rotationsachsen identisch sind.

14. **Verfahren** zum Befestigen der drehbaren Umfangswand (2b1) am feststehenden Gehäuse-Oberteil (2a) eines haubenartigen, unten im wesentlichen offenen Gehäuses (2) eines Scheiben-Mähkopfes (50), in oder unterhalb welchem ein Schneidmesser (3) rotierend um eine aufrechte Schneidmesser-Achse (3') antreibbar ist, **dadurch gekennzeichnet, dass**
- ein endliches äußere, zugfestes, biegsames Randelement (15) mit daran gehaltener äußerer Wand-Lage (17) sowie innerer Wand-Lage (18) um den Außenumfang eines drehbaren Innen-Ringes (2b2) des Gehäuses (2) herum gelegt und an diesem fixiert wird,
- insbesondere durch Verspannen der beiden Enden des Randelementes (15) gegeneinander.

15. Verfahren nach Anspruch 14,
**dadurch gekennzeichnet, dass**
- auf nach radial innen vorstehende Bolzen (16) des biegsamen äußeren Randelementes (15) eine bandförmige äußere Wand-Lage (17) und eine, insbesondere bandförmige, innere Wand-Lage (18) mittels entsprechender Durchgangsöffnungen aufgesteckt werden,
- ein etwa in der Mitte der Länge des äußeren Randelementes (15) vorhandener, mit einem Außengewinde versehener, Gewindebolzen (16.1) gegenüber dem Innen-Ring (2b2) verschraubt wird als Vorfixierung,
- das biegsame Randelement (15) um den Außenumfang des Innen-Rings (2b2) herumgelegt wird und dabei die nach radial innen vorstehende Bolzen (16) in entsprechende Ausnehmungen des Innen-Rings (2b2) eingesteckt werden,
- die Enden des endlichen, äußeren Randelementes (15) an einem Spannelement, insbesondere je einem End-Winkel (19) fixiert werden,
- die beiden Spannelemente, insbesondere End-Winkel (19), in Umfangsrichtung (U) gegeneinander verspannt werden, insbesondere mit einer Spannschraube (21).

## Claims

1. **Disc mowing head** (50), in particular a disc mowing head (50) supplementing a drum mowing head (60), comprising
- a cap-type housing (2) substantially open at the bottom and having a circumferential wall (2b1),
- at least one cutting blade (3) which can be driven inside or underneath the housing (2) and rotating about an upright cutting blade axis, the axis of rotation (3'),
- an inner ring (2b2) and
- an upper, outer edge element (15),
wherein
- the circumferential wall (2b1) of the housing (2) has two separate wall layers (17, 18) in the radial direction (11), that in particular are in contact with each other, namely
- a radially outer 1^{st} wall layer (17) and a radially inner 2^{nd} wall layer (18),
**characterised in that**
- the two wall layers (17, 18) are in contact with each other at least at their upper end **in that** they are both held between the upper, outer edge element (15) and the inner ring (2b2), and
- the upper, outer edge element (15) is a finite edge element (15).

2. Disc mowing head according to claim 1,
**characterised in that**
- the outer wall layer (17), viewed alone in the assembled state, is more flexible than the inner wall layer (18) in a radial direction at least radially inwards,
- the outer, more flexible wall layer (17) projects downwards beyond the inner, more rigid wall layer (18), and
the circumferential wall (2b1)
- at least in its lower region is sufficiently elastic radially inwards that approaching grass can bend it radially inwards,
- at least in its upper region above this lower region is sufficiently stable radially outwards to serve as a stone chip protector,
- particularly in the circumferential direction (U), has one or more successive, possibly also overlapping, wall portions.

3. Disc mowing head according to claim 2,
**characterised in that**
- the outer, more flexible wall layer (17) projects downwards beyond the inner, more rigid wall layer (18) by
- at least 2 cm, preferably at least 3 cm, preferably at least 4 cm, preferably at least 5 cm
and/or
- by at least 15%, preferably at least 30%, preferably at least 40%, preferably at least 50% of the height of the more rigid wall layer (18).

4. Disc mowing head according to any of the preceding claims,
**characterised in that**
- the two wall layers (17, 18) are in contact with each other at least at their upper end **in that** they are both clamped between a common, upper, outer edge element (15) and the inner ring (2b2),
- in particular the upper edge element (15) together with the two wall layers (17, 18) is attached to the inner ring (2b2) in an easily releasable, in particular clampable, manner.

5. Disc mowing head according to any of the preceding claims,
**characterised in that**
- the circumferential wall (2b1) of the housing (2), in particular the upper edge element (15) together with the two wall layers (17, 18) and the rotatable inner ring (2b2), is rotatable relative to a non-rotatable, fixed upper housing part (2a).

6. Disc mowing head according to any of the preceding claims,
**characterised in that**
- bolts (16) project radially inwards from the outer edge element (15),
- of which in particular one is a threaded bolt (16.1) which serves to pre-fix the edge element (15) on the rotatable inner ring (2b2),
- in particular the remaining bolts (16) can be inserted into recesses, in particular blind holes, in the outer circumference of the inner ring (2b2) in order to fix the position of the edge element (15) at the required height.

7. Disc mowing head according to any of the preceding claims,
**characterised in that**
- the inner wall layer (18) has, at least in the lower part in the circumferential direction (U), successive, possibly also overlapping, wall portions, in particular separate wall plates which do not overlap each other or wall tongues which are connected to each other only in the upper region,
and/or
- the outer wall layer (17) is a wall layer which is essentially continuous in the circumferential direction (U) and comprises in particular a flexible film or flexible fabric, the ends of which overlap in particular in the circumferential direction (U).

8. Disc mowing head according to any of the preceding claims,
**characterised in that**
- the outer wall layer (17) has a bending stiffness of less than 5 N/mm², in particular less than 3 N/mm², in particular less than 2 N/mm², in particular less than 1 N/mm²,
and/or
- the inner wall layer (18), in particular its wall layer plates, has a bending stiffness of more than 5 N/mm², in particular more than 20 N/mm², in particular more than 50 N/mm², in particular more than 100 N/mm².

9. Disc mowing head according to any of the preceding claims,
**characterised in that**
- the outer wall layer (17) has a hardness of between 30 Shore and 3 Shore, in particular between 20 Shore and 3 Shore, in particular between 10 Shore and 3 Shore,
and/or
- the inner wall layer (18), in particular its wall layer plates, has a hardness of between 50 Shore and 90 Shore, in particular between 60 Shore and 80 Shore, in particular between 65 Shore and 75 Shore.

10. Disc mowing head according to any of the preceding claims,
**characterised in that**
- the outer wall layer (17) has a weight per unit area of between 1.1 kg/m² and 1.6 kg/m², in particular between 1.25 kg/m² and 1.55 kg/m², in particular between 1.35 kg/m² and 1.45 kg/m²
and/or
- the inner wall layer (18), in particular its wall layer panels, has a weight per unit area of between 2.0 kg/m² and 6.0 kg/m², in particular between 3.0 kg/m² and 4.5 kg/m², in particular between 3.5 kg/m² and 4.0 kg/m².

11. Disc mowing head according to any of the preceding claims,
**characterised in that**
- the outer wall layer (17) has a specific weight of between 1.1 kg/m³ and 2.0 kg/m³, in particular between 1.4 kg/m³ and 1.7 kg/m³, in particular between 1.5 kg/m³ and 1.6 kg/m³
and/or
- the inner wall layer (18), in particular its wall layer panels, has a specific weight of between 0.8 kg/m³ and 1.7 kg/m³, in particular between 1.1 kg/m³ and 1.4 kg/m³, in particular between 1.2 kg/m³ and 1.3 kg/m³, in particular the wall layer panels consisting of Vulculan.

12. Disc mowing head according to any of the preceding claims,
**characterised in that**
the inner wall layer (18) has a greater thickness, in particular by a factor of 5, in particular by a factor of 10, in particular by a factor of 20, compared to the outer wall layer (17).

13. Disc mowing head according to any of the preceding claims,
**characterised in that**
- two axes of rotation from the cutting blade axis (3') and/or a mulching blade axis (5') of a mulching blade (5), which is arranged so as to rotate in the housing (2), and/or a rotation axis (2a') of the circumferential wall (2a) are spaced apart from each other by a maximum of 5 cm, preferably by a maximum of 3 cm, preferably by a maximum of 2 cm,
- in particular at least two axes of rotation are identical.

14. **Method** of fastening the rotatable circumferential wall (2b1) to the stationary upper housing part (2a) of a cap-type housing (2), which is substantially open at the bottom, of a disc mowing head (50), in or below which a cutting blade (3) can be driven so as to rotate about a vertical cutting blade axis (3'),
**characterised in that**
- a finite outer, tension-resistant, flexible edge element (15) with an outer wall layer (17) and an inner wall layer (18) held thereon is placed around the outer circumference of a rotatable inner ring (2b2) of the housing (2) and fixed thereto,
- in particular by bracing the two ends of the edge element (15) against each other.

15. Method according to claim 14,
**characterised in that**
- a band-shaped outer wall layer (17) and an, in particular band-shaped, inner wall layer (18) are fitted onto radially inwardly projecting bolts (16) of the flexible outer edge element (15) via corresponding through-holes,
- a threaded bolt (16.1) provided with an external thread approximately in the centre of the length of the outer edge element (15) is screwed to the inner ring (2b2) as a prefixing,
- the flexible edge element (15) is placed around the outer circumference of the inner ring (2b2) and the radially inwardly projecting bolts (16) are inserted into corresponding recesses in the inner ring (2b2),
- the ends of the finite, outer edge element (15) are each fixed to a clamping element, in particular an end bracket (19),
- the two clamping elements, in particular end brackets (19), are braced against each other in the circumferential direction (U), in particular with a clamping screw (21).

## Revendications

1. Tête faucheuse (50) à disques, en particulier tête faucheuse (50) à disques supplémentaire pour une tête faucheuse à rouleaux (60), comprenant
- un carter (2) en forme de capot, sensiblement ouvert en bas, présentant une paroi périphérique (2b1),
- au moins une lame de coupe (3) susceptible d'être entraînée en rotation autour d'un axe vertical de la lame de coupe, formant l'axe de rotation (3'), dans ou sous le carter (2),
- une bague intérieure (2b2), et
- un élément de bord supérieur (15) extérieur,
dans laquelle
- la paroi périphérique (2b1) du carter (2) présente, dans la direction radiale (11), deux couches de paroi séparées (17, 18), en particulier en contact l'une avec l'autre, à savoir
- une première couche de paroi radialement extérieure (17) et une deuxième couche de paroi radialement intérieure (18),
**caractérisée en ce que**
- les deux couches de paroi (17, 18) sont en contact l'une avec l'autre au moins à leur extrémité supérieure, en étant toutes deux maintenues entre l'élément de bord supérieur (15) extérieur et la bague intérieure (2b2),
et
- l'élément de bord supérieur (15) extérieur est un élément de bord terminal (15).

2. Tête faucheuse à disques selon la revendication 1,
**caractérisée en ce que**
- la couche de paroi extérieure (17), considérée seule à l'état monté, est plus flexible en direction radiale, au moins radialement vers l'intérieur, que la couche de paroi intérieure (18),
- la couche de paroi extérieure (17), plus flexible, dépasse vers le bas la couche de paroi intérieure (18), plus rigide, et
la paroi périphérique (2b1)
- est, au moins dans sa zone inférieure, suffisamment élastique vers l'intérieur dans le sens radial pour que l'herbe qui s'en rapproche puisse la replier vers l'intérieur dans le sens radial,
- est, au moins dans sa partie supérieure au-dessus de cette partie inférieure, suffisamment stable vers l'extérieur dans le sens radial pour servir de protection contre les chutes de pierres,
- présente en particulier, dans la direction périphérique (U), une ou plusieurs parties de paroi successives, qui, le cas échéant, se chevauchent.

3. Tête faucheuse à disques selon la revendication 2,
**caractérisée en ce que**
- la couche de paroi extérieure (17), plus flexible, dépasse vers le bas de la couche de paroi intérieure (18), plus rigide, en particulier
- d'au moins 2 cm, mieux d'au moins 3 cm, mieux d'au moins 4 cm, mieux d'au moins 5 cm,
et/ou
- d'au moins 15 %, mieux d'au moins 30 %, mieux d'au moins 40 %, mieux d'au moins 50 % de la hauteur de la couche de paroi (18) plus rigide.

4. Tête faucheuse à disques selon l'une des revendications précédentes, **caractérisée en ce que**
- les deux couches de paroi (17, 18) sont en contact l'une avec l'autre au moins à leur extrémité supérieure, en étant toutes deux coincées entre un élément de bord supérieur (15) extérieur commun et la bague intérieure (2b2),
- en particulier, l'élément de bord supérieur (15), y compris les deux couches de paroi (17, 18), est fixé à la bague intérieure (2b2) de manière facilement détachable, en particulier de manière à pouvoir être serré.

5. Tête faucheuse à disques selon l'une des revendications précédentes, **caractérisée en ce que**
- la paroi périphérique (2b1) du carter (2), en particulier l'élément de bord supérieur (15), y compris les deux couches de paroi (17, 18) et la bague intérieure (2b2) rotative, peut tourner par rapport à une partie supérieure (2a) fixe non rotative du carter.

6. Tête faucheuse à disques selon l'une des revendications précédentes, **caractérisée en ce que**
- des boulons (16) s'étendent radialement vers l'intérieur à partir de l'élément de bord extérieur (15),
- dont l'un en particulier est un boulon fileté (16.1) qui sert à la préfixation de l'élément de bord (15) sur la bague intérieure (2b2) rotative,
- en particulier les autres boulons (16) peuvent être insérés dans des évidements, en particulier des trous borgnes, dans la périphérie extérieure de la bague intérieure (2b2) pour la fixation en position de l'élément de bord (15) en hauteur.

7. Tête faucheuse à disques selon l'une des revendications précédentes, **caractérisée en ce que**
- la couche de paroi intérieure (18) présente, au moins dans la partie inférieure, des parties de paroi (18) successives dans la direction périphérique (U), qui, le cas échéant, se chevauchent, en particulier des plaques de paroi séparées qui ne se chevauchent pas, ou des languettes de paroi qui sont reliées entre elles uniquement dans la zone supérieure,
et/ou
- la couche de paroi extérieure (17) est une couche de paroi sensiblement continue dans la direction périphérique (U), qui comprend en particulier une feuille flexible ou un tissu flexible, dont les extrémités se chevauchent en particulier dans la direction périphérique (U).

8. Tête faucheuse à disques selon l'une des revendications précédentes, **caractérisée en ce que**
- la couche de paroi extérieure (17) présente une rigidité en flexion inférieure à 5 N/mm², en particulier inférieure à 3 N/mm², en particulier inférieure à 2 N/mm², en particulier inférieure à 1 N/mm²,
et/ou
- la couche de paroi intérieure (18), en particulier ses plaques de couche de paroi, présente une rigidité à la flexion supérieure à 5 N/mm², en particulier supérieure à 20 N/mm², en particulier supérieure à 50 N/mm², en particulier supérieure à 100 N/mm².

9. Tête faucheuse à disques selon l'une des revendications précédentes, **caractérisée en ce que**
- la couche de paroi extérieure (17) présente une dureté comprise entre 30 shore et 3 shore, en particulier entre 20 shore et 3 shore, en particulier entre 10 shore et 3 shore,
et/ou
- la couche de paroi intérieure (18), en particulier ses plaques de couche de paroi, présente une dureté comprise entre 50 shore et 90 shore, en particulier entre 60 shore et 80 shore, en particulier entre 65 shore et 75 shore.

10. Tête faucheuse à disques selon l'une des revendications précédentes, **caractérisée en ce que**
- la couche de paroi extérieure (17) présente une masse surfacique comprise entre 1,1 kg/m² et 1,6 kg/m², en particulier entre 1,25 kg/m² et 1,55 kg/m², en particulier entre 1,35 kg/m² et 1,45 kg/m²,
et/ou
- la couche de paroi intérieure (18), en particulier ses plaques de couche de paroi, présente une masse surfacique comprise entre 2,0 kg/m² et 6,0 kg/m², en particulier entre 3,0 kg/m² et 4,5 kg/m², en particulier entre 3,5 kg/m² et 4,0 kg/m².

11. Tête faucheuse à disques selon l'une des revendications précédentes, **caractérisée en ce que**
- la couche de paroi extérieure (17) présente un poids spécifique compris entre 1,1 kg/m³ et 2,0 kg/m³, en particulier entre 1,4 kg/m³ et 1,7 kg/m³, en particulier entre 1,5 kg/m³ et 1,6 kg/m³,
et/ou
- la couche de paroi intérieure (18), en particulier ses plaques de couche de paroi, présente un poids spécifique compris entre 0,8 kg/m³ et 1,7 kg/m³, en particulier entre 1,1 kg/m³ et 1,4 kg/m³, en particulier entre 1,2 kg/m³ et 1,3 kg/m³, en particulier les plaques de couche de paroi sont en Vulculan.

12. Tête faucheuse à disques selon l'une des revendications précédentes, **caractérisée en ce que**
la couche de paroi intérieure (18) présente une épaisseur supérieure à la couche de paroi extérieure (17) en particulier d'un facteur 5, en particulier d'un facteur 10, en particulier d'un facteur 20.

13. Tête faucheuse à disques selon l'une des revendications précédentes, **caractérisée en ce que**
- deux axes de rotation respectifs parmi l'axe de lame de coupe (3') et/ou un axe de lame de fragmentation (5') d'une lame de fragmentation (5), disposée de manière rotative dans le carter (2), et/ou un axe de rotation (2a') de la paroi périphérique (2a) sont espacés l'un de l'autre de 5 cm au maximum, mieux de 3 cm au maximum, mieux de 2 cm au maximum,
- en particulier, au moins deux axes de rotation respectifs sont identiques.

14. Procédé pour fixer la paroi périphérique rotative (2b2) sur la partie supérieure fixe (2a) d'un carter (2) en forme de capot, sensiblement ouvert en bas, d'une tête faucheuse à disques (50), dans ou sous laquelle une lame de coupe (3) peut être entraînée en rotation autour d'un axe vertical (3') de la lame de coupe,
**caractérisé en ce que**
- un élément de bord (15) extérieur terminal, flexible, résistant à la traction, avec une couche de paroi extérieure (17) et une couche de paroi intérieure (18) maintenues sur celui-ci, est placé autour de la périphérie extérieure d'une bague intérieure (2b2) rotative du carter (2) et est fixé sur celle-ci,
- en particulier en serrant les deux extrémités de l'élément de bord (15) l'une contre l'autre.

15. Procédé selon la revendication 14,
**caractérisé en ce que**
- une couche de paroi extérieure (17) en forme de bande et une couche de paroi intérieure (18), en particulier en forme de bande, sont enfilées au moyen d'ouvertures de passage correspondantes sur des boulons (16) faisant saillie radialement vers l'intérieur de l'élément de bord extérieur (15) flexible,
- un boulon fileté (16.1) pourvu d'un filetage extérieur, présent à peu près au milieu de la longueur de l'élément de bord extérieur (15), est vissé par rapport à la bague intérieure (2b2) en tant que préfixation,
- l'élément de bord flexible (15) est placé autour de la périphérie extérieure de la bague intérieure (2b2) et les boulons (16) faisant saillie radialement vers l'intérieur sont alors insérés dans des évidements correspondants de la bague intérieure (2b2),
- les extrémités de l'élément de bord extérieur terminal (15) sont fixées à un élément de serrage, en particulier à une équerre d'extrémité (19),
- les deux éléments de serrage, en particulier les équerres d'extrémité (19), sont serrés l'un contre l'autre dans la direction périphérique (U), en particulier avec une vis de serrage (21).
